# EUROPÄISCHE PATENTANMELDUNG

(11) **EP 1 153 837 A1**
(43) Veröffentlichungstag der Anmeldung: **14.11.2001**
(21) Anmeldenummer: 00109726.0
(22) Anmeldetag: 08.05.2000
(51) Int. Cl.: B65C 3/06, B29C 63/42

(54) **Verfahren und Vorrichtung zum Anbringen röhrenförmiger Etiketten an Behälter**

(71) Anmelder: Hüppi-Invest AG, 9500 Wil (CH)
(72) Erfinder: Braun, August, 8200 Schaffhausen (CH); Boltshauser, Werner, 9606 Bütschwil (CH)
(74) Vertreter: Stocker, Kurt

(57) **Zusammenfassung**

Zum Anbringen einer Dekorfolie auf einem Dosenkörper (3) wird von einer Folienbahn ein Folienstück (20) abgeschnitten und von dessen Vorderkante zu dessen Hinterkante auf einen Wickeldorn (6) aufgewickelt und etwas überlappend am Wickeldorn (6) gehalten. Am Wickeldorn werden die aneinander anliegenden Folienbereiche (20c) der Vorderkante und der Hinterkante miteinander versiegelt. Anschliessend wird das zylindermantelförmig geschlossene Folienstück (20) vom Wickeldorn (6) auf einen Dosenkörper (3) bewegt und mittels eines Schrumpfvorganges zumindest teilweise an den Dosenkörper (3) angelegt. Der Wickeldorn (6) kann stabil und präzise ausgebildet werden. Zudem wird der Wickeldorn (6) so ausgebildet, dass das Folienstück (20) zumindest im Bereich der Vorderkante am Wickeldorn (6) haftet und exakt um den Wickeldorn (6) gewickelt werden kann. Zum Erzielen dieser Haftung wird das Innere des Wickeldornes (6) vorzugsweise mit einer Unterdruckvorrichtung verbunden, wobei feine Löcher durch den Mantel des Wickeldornes (6) führen, so dass das Folienstück (20) im Bereich der Löcher vom Unterdruck am Wickeldorn (20) gehalten wird. Beim Festsetzen eines Folienstückes (20) am Wickeldorn (6) kann auf einen Klebstoff verzichtet werden. Die Vorderkante kann exakt ausgerichtet gehalten werden. Aufgrund der präzisen Ausgestaltung des Wickeldornes (6) ist auch gewährleistet, dass die Hinterkante nach dem Aufwickeln an eine genau definierte Stelle zu liegen kommt. Für den Überlappungsbereich und das Versiegeln sind keine unerwünscht grossen Toleranzen nötig.

## Beschreibung

Die Erfindung bezieht sich auf ein Verfahren nach dem Oberbegriff des Anspruches 1, auf eine Vorrichtung nach dem Oberbegriff des Anspruches 7 und auf einen Dosenkörper mit einer Dekorfolie nach dem Oberbegriff des Anspruches 13.

Zur Vereinfachung der Herstellung von Gefässen, insbesondere Aerosoldosen mit einem Dekor, können bei den verbreiteten Herstellungsverfahren einzelne Bearbeitungsschritte vereinfacht oder gegebenenfalls weggelassen bzw. ersetzt werden. Aus der WO95/34474 ist beispielsweise ein Verfahren bekannt, bei dem auf die Reinigung, Grundlackierung, Bedruckung und Überlackierung der Gefässaussenfläche im wesentlichen verzichtet werden kann. Das Dekor wird auf eine Folie aufgedruckt und die Folie wird dann auf die Gefässaussenfläche aufgebracht. Zwar war es bei Behältnissen von einfachen geometrischen Formen, wie Zylindern, bekannt, eine Dekorschicht nachträglich aufzukleben. Dies schien aber bei Metalldosen mit eingezogenem Halsteil nicht möglich zu sein, weil ja das Schichtmaterial beim Verformen des Halsteiles diese Verformung mitmachen muss. Gemäss der WO95/34474 gelingt dies aber durch eine entsprechende Anpassung und Auswahl des Folienmateriales.

Durch das Aufbringen des Dekors in der Form einer Folie ergeben sich verschiedene Vorteile. Zunächst ist es nicht erforderlich, alle für die Gefässherstellung nötigen Vorgänge unmittelbar hintereinander ablaufen zu lassen. Die bedruckte Folie kann vollständig bedruckt und an der Rückseite mit Siegellack versehen bezogen werden und muss somit nicht in der Anlage zur Dosenherstellung bearbeitet werden. Für das Bedrucken von Folien können rationeller und billiger arbeitende Maschinen als für das Bedrucken der Dosen selbst eingesetzt werden. Im allgemeinen wird dabei auch beim Reinigungsvorgang eingespart werden können, weil das Bekleben mit einer fertigen, blattförmigen Schicht im allgemeinen weniger heikel ist als das Lackieren, insbesondere hinsichtlich möglicher Fettrückstände. Überdies werden neue, bisher bei solchen Dosen nicht gekannte Möglichkeiten für das Dekor geschaffen. Beispiele dafür sind die Aufbringung eines Prägedruckes und die Verwendung von Druckverfahren und -arten, die bisher für solche Dosen nicht angewendet werden konnten.

Eine weitere Ersparnis ergibt sich durch das Wegfallen von Trocknungsvorgängen. Durch das Weglassen verschiedener Anlagenteile vermindern sich auch die Investitionskosten.

Aus der EP 0 525 729 A1 ist eine Lösung bekannt, bei der ein Etikett an einem Gefäss angebracht wird. Dazu werden die Getränkedosen auf einem Drehtisch mitgedreht. In einem ersten Drehbereich wird die Vorderkante eines Etiketts bzw. einer Folie mit Klebstoff am Gefäss angeklebt und etwas überlappend um das Gefäss gewickelt. Die Verklebung wird lediglich als Aufwickelhilfe benutzt und kann somit nicht gewährleisten, dass die Vorderkante des Etiketts exakt ausgerichtet am Gefäss haftet. Im Bereich mit dem Klebstoff ist das Etikett etwas von der Gefässwand beabstandet, was aus optischen Gründen unerwünscht ist. Zudem erschwert der Klebstoff das Festsiegeln der Hinterkante des Etiketts. Gegebenenfalls muss der Klebstoff so angebracht werden, dass die Versiegelung in einem klebstofffreien Bereich erfolgen kann, was mit einem zusätzlichen Aufwand verbunden ist. Weil der Umfang der einzelnen Gefässe eines Typs innerhalb eines Bereiches variiert, ist nach dem Aufwickeln des Etiketts auch die Lage der Hinterkante nicht bei jedem Gefäss exakt gleich, was beim Siegeln wieder eine gewisse Toleranz bedingt. Diese Toleranz führt dazu, dass einzelne Gefässe abstehende Hinterkanten oder unvollständig versiegelte Hinterkanten aufweisen. Bei Aerosoldosen sind beispielsweise aufgrund der Abnützung der Press-bzw. Ziehwerkzeuge Umfangsunterschiede von bis zu 0.6mm möglich. Entsprechend müssen überdimensionierte Überlappungsbereiche gewählt werden, damit die Siegelverbindung mit Sicherheit im Überlappungsbereich ausgebildet wird.

Zum Festsiegeln der Folienhinterkante an der Folienvorderkante wird eine parallel zur Gefässachse verlaufende, heizbare Siegelfläche gegen den Überlappungsbereich der Folie gepresst. Indem jedem Gefässplatz des Drehtisches eine radial auf das Gefäss zu- und wegbewegbare ebene Siegelfläche zugeordnet ist, können diese Siegelflächen in einem vorgegebenen Drehbereich am Gefäss gehalten werden. Es hat sich nun gezeigt, dass diese Versiegelung des Überlappungsbereiches nicht genügend exakt ausgeführt werden kann. Zudem liegt die Folie nicht überall exakt am Gefäss an, so dass die Folie gegebenenfalls aufgerissen wird. Klebstoffrückstände im Überlappungsbereich und das ungenügende Anliegen am Gefäss führen zu einer unattraktiven Erscheinung. Gegebenenfalls können zumindest Teile einer derart angebrachten Dekorfolie vom Gefäss abgerissen werden. Bei einer solchen unvollständigen Haftung der Folie am Gefäss ergeben sich insbesondere auch Probleme, wenn etwa bei Aerosoldosen nach dem Anbringen der Folie am offenen Dosenende ein Halsteil mit einem Ventilsitz ausgebildet werden soll. Die Folien werden beim Verformen von den Verformungswerkzeugen zumindest teilweise beschädigt und/oder vom Gefäss gelöst.

Um auch bei Abweichungen von der zylindrischen Form ein möglichst gutes Haften der Dekorfolie am Dosenkörper erzielen zu können, werden gegebenenfalls Schrumpffolien mit einer Schrumpffähigkeit von bis zu 50% eingesetzt. Diese stark schrumpfenden Folien haben Dicken von mindestens 40µm und sind relativ teuer. Aufgrund der grossen Foliendicke entsteht eine dicke unschöne Naht. Es hat sich auch gezeigt, dass die bekannten Schrumpffolien nicht flächig an der Dosenwand haften.

Wenn aus einer bedruckten Schrumpffolie ein schlauchförmiges Zwischenprodukt - ein sleeve - hergestellt wird, so muss ein Folienband so umgelegt werden, dass die beiden Seitenränder überlappend zusammentreffen. Die überlappenden Seitenränder werden mittels eines aufgebrachten Klebstoffes miteinander verbunden. Das geschlossene Band wird flach gedrückt und mit zwei seitlichen Falzlinien aufgerollt. Beim Herstellen eines schlauchförmigen Folienbandes treten grosse Umfangs-Ungenauigkeiten auf. Entlang des Schlauches kann der Umfang des Schlauches um 0.5mm variieren. Zudem führt auch der verwendete Klebstoff zu optischen Mängeln, welche oben bereits anhand der Lösungen gemäss der EP 0 525 729 A1 beschrieben sind. Weil eine genügende Schrumpffähigkeit quer zur Bandlängsrichtung und eine genügende Stabilität für das Anbringen an Dosenkörpern nur mit Folien mit Dicken über 35µm erzielbar ist, stehen die Verbindungsnähte zumindest um 35µm, nämlich um die Mächtigkeit des Klebstoffes und die Foliendicke ab. Vom schlauchförmigen Folienband werden Abschnitte über Gefässe gestülpt und anschliessend am Gefäss festgeschrumpft. Weil der Schlauchumfang auch bereits über die Länge eines Abschnittes variieren kann, können beim Festschrumpfen Rümpfe entstehen. Zudem bleiben die zwei Falte sichtbar, die vom Flachdrücken und Aufrollen herrühren. Eine Dekorfolie, die in der Form eines Folienschlauch-Abschnittes auf einen Dosenkörper gebracht wird, kann aufgrund der oben angeführten Mängel keine präzise Beschichtung gewährleisten.

Zum Verengen des offenen Dosenendes werden bei Aerosoldosen Einziehringe mit unterschiedlichen Innendurchmessern verwendet. Dabei werden die Einziehringe in Richtung der Dosenachse auf die Dose gestossen, wobei ausgehend von einem Einziehring mit grossem Durchmesser Ringe mit immer kleineren Innendurchmessern verwendet werden. Die beim Stossen der Ringe auf den Dosenkörper auftretenden Scherkräfte zwischen der Dekorfolie und dem metallischen Dosenkörper sind sehr gross. Aus dem Bereich der Getränkedosen sind kleinere Verengungen des offenen Dosenendes bekannt, weil der Durchmesser der Dosendeckel etwas kleiner ist als der Dosendurchmesser. Zum Verengen der Getränkedosen an den offenen Enden werden Spin-flow-necking-Verfahren und -Vorrichtungen eingesetzt. Aus der US 5 150 595 ist beispielsweise eine Lösung mit drehenden Verengungswerkzeugen bekannt. Weil die Verformungen für einen Aerosoldosen-Halsteil wesentlich grösser sind, als jene für einen Sitz eines Getränkedosendeckels, kann mit einer bekannten Neckingvorrichtung nicht gewährleistet werden, dass die Dekorfolie beim Ausbilden des Halsteiles einer Aerosoldose unbeschädigt bleibt.

Aus dem Bereich der Getränkedosen sind verschiedene Verfahren zum Herstellen von Dosen bekannt. So beschreibt die US 4 095 544 das Herstellen einer nahtfreien Stahldose. Dabei wird der zylindrische Dosenkörper in drei Schritten aus einem mit Zinn beschichteten Stahlblech hergestellt. In einem ersten Schritt wird mit einem Stanzschritt eine Scheibe mit dem gewünschten Durchmesser bereitgestellt. In einem zweiten Schritt wird mit einem Pressvorgang ein zylindrischer Napf ausgeformt, der auch von deutschsprachigen Fachleuten als zylindrischer Cup bezeichnet wird. In einem direkt anschliessenden dritten Schritt wird der Cup zu einem zylindrischen Dosenkörper abgestreckt. Gemäss der US 4 095 544 ist der Pressstempel rohrförmig um den Abstreckstempel angeordnet und die entsprechenden äusseren Halteringe sind übereinander angeordnet, so dass das Pressen und Abstrecken auf der gleichen Maschine durchgeführt werden kann. Der Dosenkörper muss, wie bei den gängigen Herstellungsverfahren für Aerosoldosen aus Aluminium, gewaschen, lackiert und mehrmals getrocknet werden.

Aus der EP 0 666 124 A1 ist ein Verfahren bekannt, bei dem der Dosenkörper aus einem mit Polyester beschichteten Stahlblech hergestellt wird. Dazu muss aus dem beschichteten Blech eine Scheibe herausgestanzt und diese zu einem zylindrischen Cup gepresst werden. Beim anschliessenden Abstrecken und gegebenenfalls Glätten besteht die Gefahr, dass die Kunststoffschicht beschädigt wird. Um eine Beschädigung zu verhindern, soll eine Polyesterschicht mit biaxial orientierte Molekülketten verwendet werden, bei der das Verhältnis von Diffraktionsintensitäten in verschiedenen Abständen in vorgegebenen Bereichen liegt. Beim Tiefziehen wird der zylindrische Mantel des Zwischenproduktes zwischen zwei ringförmigen Teilen gehalten und mit einem Stössel, der einen kleineren Durchmesser hat als das Zwischenprodukt, bzw. der Cup, in die gewünschte Länge gezogen. Es hat sich nun gezeigt, dass beim Tiefziehen mit optimal ausgeformten ringförmigen Halteteilen und dem entsprechend dimensionierten Stössel die Dicke des Mantels reduziert wird, ohne dass die Polyesterschicht zerstört wird. Das heisst also, dass auch beim zylindrischen Dosenkörper eine Polyesterschicht vorhanden ist, die das Stahlblech dicht abschliesst.

Zur Zeit werden auf dem Markt auch andere beschichtete Bleche angeboten, die ohne Beschädigung der Beschichtung press- und abstreckbar und gegebenenfalls auch glätbar sind. Dabei werden diese beschichteten Bleche entweder durch das Aufkaschieren einer Kunststofffolie oder wie in der WO98/52750 beschrieben, durch das direkte Aufextrudieren einer Kunststoffschicht auf das Blech (vgl. Protact, der Firma Hoogovens Packaging B.V., NL) bereitgestellt. Weil das Tiefziehen des beschichteten Stahlbleches ohne Ölzugabe durchgeführt werden kann, müssen keine aufwendigen Reinigungs- und Beschichtungsschritte durchgeführt werden. Der Dosenkörper kann bedruckt, lackiert, getrocknet und zum Aufnehmen des Deckelverschlusses am freien Dosenende verformt werden.

Auch bei einem Dosenkörpern, der aus beschichtetem Stahlblech hergestellt ist, kann eine Dekorfolie angebracht werden, wobei ein gutes Haften nur gewährleistet ist, wenn die Folie exakt angeordnet und der Überlappungsbereich präzise versiegelt wird, was mit den bekannten Vorrichtungen zum Anordnen von Dekorfolien nicht gewährleistet werden kann.

Der vorliegenden Erfindung liegt daher die Aufgabe zugrunde, eine Lösung zu finden mit der Dekorfolien exakt an Dosenkörpern, insbesondere an Dosenkörpern von Aerosoldosen, angeordnet werden können.

Diese Aufgabe wird durch die Merkmale des Anspruches 1, bzw. des Anspruches 7, bzw. des Anspruches 13 gelöst. Die abhängigen Ansprüche beschreiben bevorzugte bzw. alternative Ausführungsformen. Unter Dosenkörpern sollen alle Gefässe, insbesondere auch gefässförmige Zwischenprodukte verstanden werden.

Beim Lösen der Aufgabe wurde erkannt, dass das ungenaue Anordnen der Folien am Dosenkörper, von kleinen Unterschieden zwischen den einzelnen Dosenkörpern und von deren Verformbarkeit herrührt. Für das direkte Festsetzen des Folienanfanges am Dosenkörper muss gemäss dem Stande der Technik ein Klebstoff zwischen die Folie und den Dosenkörper gebracht werden, was ebenfalls das präzise Anliegen der Folie am Dosenkörper beeinträchtigt. In einem zweiten erfinderischen Schritt wurde erkannt, dass die Dekorfolie um einen Wickeldorn gewickelt und an diesem im Überlappungsbereich versiegelt werden kann. Durch die Wahl eines Wickeldornes können die Gründe für das ungenaue Anordnen der Folie am Dosenkörper beseitigt werden. Der Wickeldorn kann stabil und präzise ausgebildet werden. Zudem kann der Wickeldorn so ausgebildet sein, dass die Folie zumindest im Bereich des Folienanfangs am Wickeldorn haftet und die Folie exakt um den Dorn gewickelt werden kann. Zum Erzielen dieser Haftung wird das Innere des Wickeldornes vorzugsweise mit einer Unterdruckvorrichtung verbunden, wobei feine Löcher durch den Mantel des Wickeldornes führen, so dass die Folie im Bereich der Löcher vom Unterdruck am Wickeldorn gehalten wird. Es versteht sich von selbst, dass die Folie auch aufgrund von elektrostatischen Haftungskräften, oder gegebenenfalls auch mechanisch am Wickeldorn gehalten werden kann.

Beim Festsetzen einer Dekorfolie an einem Wickeldorn kann auf einen Klebstoff verzichtet werden. Die Vorderkante liegt direkt am Wickeldorn an und kann exakt ausgerichtet gehalten werden. Aufgrund der präzisen Ausgestaltung des Wickeldornes ist auch gewährleistet, dass die Hinterkante nach dem Aufwickeln an eine genau definierte Stelle zu liegen kommt. Für den Überlappungsbereich und das Versiegeln sind keine unerwünscht grossen Toleranzen nötig. So kann es beispielsweise bereits genügen, eine Überlappung von lediglich 1-2mm vorzusehen. Die Siegelfläche wird entsprechend schmal gewählt, so dass mit wenig Energie- und Zeitaufwand eine genügende Siegelverbindung erzielbar wird. Weil der Umfang des Wickeldornes nur wenig grösser gewählt ist, als der Umfang des Dosenkörpers an dem das geschlossene Folienstück angebracht werden soll, muss kein starker Schrumpfprozess durchgeführt werden. Deshalb und aufgrund der exakten Ausrichtung kann mit einer äusserst dünnen Folie mit einer Dicke von weniger als 25µm, vorzugsweise zwischen 9µm und 21µm eine vollständig dicht am Dosenkörper anliegende Dekorschicht bereitgestellt werden, die optisch sehr ansprechend ist.

Weil die Folie vorzugsweise von einer Rolle abgewickelt wird, wird eine Schneideinrichtung eingesetzt, die Folienstücke abtrennt, welche nach dem Umwickeln des Wickeldornes die gewünschte Überlappung gewährleisten. Im Überlappungsbereich erfolgt eine Versiegelung, die nun aufgrund des festen Wickeldornes auch mit einem Anpressdruck durchgeführt werden kann, der beim Anwenden an einem Dosenkörper zu einer Verformung des Dosenkörpers führen würde. Die Dekorfolie muss so ausgebildet sein, dass im Überlappungsbereich miteinander versiegelbare Folienflächen aneinander anliegen. Es gibt beispielsweise eine bedruckbare, handelsübliche Kunststofffolie Label-Lyte ROSO LR 400, der Firma Mobil Oil Corporation, die beidseits eine dünne Siegelschicht umfasst. Die Folie ist mit einer Dicke von 20µm und von 50µm erhältlich. Wenn nun vorzugsweise auf dem inneren überlappenden Folienrand kein Druck angebracht wird, so liegen im Überlappungsbereich die beiden Siegelschichten aneinander an. Beim Versiegeln des Überlappungsbereiches wird auch die am Wickeldorn anliegende Siegelschicht erwärmt und an den Wickeldorn gepresst. Damit die am Wickeldorn zylinderförmig geschlossene Folie nicht am Wickeldorn festgesiegelt wird, müssen die Siegelschicht und die Aussenfläche des Wickeldornes so ausgebildet sein, dass sie auch nach einem Siegelvorgang nicht aneinander haften. Bei der Verwendung der handelsüblichen Folie ROSO LR 400 erfolgt keine Versiegelung am Wickeldorn, wenn dieser aus Metall gebildet ist.

Die zylinderförmig geschlossene Folie muss nun vom Wickeldorn auf einen Dosenkörper übertragen werden. Dazu wird der Dosenkörper in Achsrichtung an den Wickeldorn anschliessend gehalten und die geschlossene Folie vom Wickeldorn über den Dosenkörper bewegt. Der Durchmesser des Wickeldornes ist vorzugsweise wenig grösser als der Durchmesser des Dosenkörpers, so dass ein problemloses Überstreifen der geschlossenen Folie gewährleistet ist. Wenn die Folie beim Umwickeln des Wickeldornes mittels Unterdruck am Wickeldorn gehalten wurde, muss diese Haftverbindung durch ein Abbauen des Unterdruckes beseitigt werden. Weil die geschlossene Folie einen etwas grösseren Innendurchmesser aufweist als der Dosenkörper, muss die Folie zumindest einen minimalen Schrumpfprozess durchlaufen, bis sie vollständig am Dosenkörper anliegt. Bei vielen Kunststofffolien ist die Dimensionsstabilität in den beiden Hauptrichtungen der Folie unterschiedlich. Bei einer Schrumpffolie in der Form einer um eine Wickelachse aufgewickelten Folienbahn, ist die Schrumpffähigkeit in Bahnlängsrichtung, bzw. senkrecht zur Wickelachse meist höher als parallel zur Wickelachse. Dies ist gerade dann vorteilhaft, wenn die Folie in ihrer Längsrichtung um den Wickeldorn gewickelt wird, weil dann nach dem Bewegen der geschlossenen Folie auf den Dosenkörper ein Schrumpfvorgang durchgeführt werden kann, bei dem sich die Folie in Umfangsrichtung verkürzt und sich dabei präzis an die Dosenaussenfläche anschmiegt.

Es hat sich gezeigt, dass die Schrumpfeigenschaft der Folie mit einer Dicke von 20µm meist schon genügt. Die erfindungsgemässe Lösung ermöglicht die Verwendung von Folien mit kleinerer Dicke.

Hier zeigt sich ein Vorteil der um den Wickeldorn gewickelten Folie im Vergleich mit einem an der Dose angeordneten Folienschlauch. Weil die Schrumpffähigkeit eines Folienschlauches in dessen Längsrichtung erhöht ist, würde ein auf die Dose aufgebrachter Schlauchabschnitt in der Richtung der Dosenachse mehr schrumpfen als in der Umfangsrichtung der Dose, was ein exaktes Anlegen des Folienschlauches an den Dosenkörper verhindern würde. Bei der Verwendung eines Folienschlauches, würden die beim Aufrollen entstehenden beiden seitlichen Falte unerwünschte Unebenheiten an der Dosenaussenfläche bilden. Um auch in Umfangsrichtung ein genügendes Schrumpfen gewährleisten zu können, müsste die Folie dick gewählt werden, was mit höheren Kosten und einer unerwünscht hohen Stufe beim Überlappungsbereich verbunden wäre.

Die Bearbeitungsstation zum Anbringen der Dekorfolie ist vorzugsweise mit einem Drehtisch ausgerüstet. Dabei ist jedem Dosenplatz ein Wickeldorn zugeordnet, wobei die Wickeldorne vorzugsweise über den zu bearbeitenden Dosen angeordnet sind. Von einer Folienbahn wird ein Folienstück abgeschnitten und auf einen Wickeldorn aufgewickelt, wobei das Folienstück mit der Vorderkante und der Hinterkante etwas überlappend am Wickeldorn gehalten wird. Vorzugsweise wird mittels Unterdruck eine Haftung der Folie am Wickeldorn erzielt wird. Um die aneinander anliegenden Folienbereiche der Vorderkante und der Hinterkante miteinander zu versiegeln, wird eine heizbare Siegelfläche gegen den Überlappungsbereich gepresst. Wenn jedem Dosenplatz des Drehtisches ein Siegelkopf mit einer Siegelfläche zugeordnet ist, können diese Siegelflächen in einem vorgegebenen Drehbereich, bzw. während einer vorgegebenen Drehzeit, am Überlappungsbereich und somit am Wickeldorn gehalten werden. Anschliessend werden die zylindermantelförmig geschlossenen Folien vom Wickeldorn über den unter dem Wickeldorn befindlichen Dosenkörper geschoben. Bei der Verschiebung der geschlossenen Folien wird der Unterdruck im Wickeldorn ausgeschaltet, so dass die Haftungskräfte abgebaut werden. Gegebenenfalls wird sogar ein Überdruck aufgebaut, um das Verschieben zu erleichtern. Um ein einfaches Abstreifen der geschlossenen Folie zu erzielen, wird der Wickeldorn gegebenenfalls so ausgebildet, dass dessen Querschnittsfläche zum Abstreifen der Folie reduziert werden kann. Die Folie wird von Rollen, Bändern, Armen oder gegebenenfalls mittels Saug- oder Blasvorrichtungen vom Wickeldorn auf den zugeordneten Dosenkörper bewegt.

Die zylindermantelförmig geschlossene Folie hat einen Umfang der etwas grösser ist als der maximale Umfang des Dosenkörpers. Daher muss die Folie zumindest ein wenig schrumpfbar sein, um ein dichtes Anliegen am Dosenkörper erzielbar zu machen. Weil das Schrumpfen und das Versiegeln unter Wärmeeinwirkung erzielt wird, ist es zweckmässig, wenn die zum Siegeln benötigte Temperatur etwas unter der minimalen Temperatur für das Schrumpfen liegt. Bei der bevorzugten Folie ROSO LR 400 kann der Siegelvorgang bei einer Temperatur von ca. 130°C durchgeführt werden. Das Schrumpfen der Folie beginnt aber erst bei Temperaturen von mindestens 140°C.

Um zu verhindern, dass sich die Folie am Dosenkörper verschiebt, wird an der Bearbeitungsstation zum Anbringen der Dekorfolie zumindest eine Schrumpfeinheit vorgesehen, welche die Folie so erwärmt, dass sie zumindest in einem ringförmigen Teilbereich so eng am Dosenkörper anliegt, dass die Dose in weitere Bearbeitungsstationen bewegt werden kann, ohne dass sich die Folie relativ zum Dosenkörper verschiebt. In einer weiteren Bearbeitungsstation, vorzugsweise mit einem Drehtisch, wird die Folie im wesentlichen vollständig an den Dosenkörper geschrumpft. Dazu wird die Folie mit Strahlungswärme und/oder Kontaktwärme insbesondere mit Heissluft so erwärmt, dass sie den gewünschten Schrumpfungsprozess durchläuft.

Bei einer Getränkedose kann nach dem Schrumpfvorgang die Haftung der Folie am Dosenkörper bereits genügen, wobei dann die Folie nach dem Aufschneiden von der Dose abgenommen werden kann. Bei Aerosoldosen sind die Anforderungen an das Haften der Folie grösser. Die Folie muss auch nach einer Beschädigung bzw. einem Aufschneiden am Dosenkörper haften bleiben. Dazu wird vorzugsweise nach dem Schrumpfen noch ein Siegelvorgang durchgeführt, bei dem die Folie zumindest in einem Teilbereich des Dosenkörpers fest mit dem Dosenkörper verbunden wird. Die zum Versiegeln benötigte Wärme wird vorzugsweise induktiv auf den Dosenkörper übertragen. Gegebenenfalls werden aber auch Pressflächen zum Übertragen von Kontaktwärme und Anpresskräften eingesetzt. Um diese Versiegelung durchführen zu können, muss die an den Dosenkörper anliegende Kontaktfläche der Folie zumindest im Siegelbereich eine Siegelschicht umfassen, die eine Siegelverbindung zum Dosenkörper gewährleisten kann. Weil die Folie am Wickeldorn mit einem Siegelvorgang verschlossen wird, muss die Oberfläche des Wickeldornes so ausgebildet sein, dass die Siegelschicht mit dieser Oberfläche keine Siegelverbindung eingeht.

Die am Wickeldorn zylindrisch geschlossene Folie kann vom Wickeldorn auf einen zylindrischen Dosenkörper oder auch auf einen im Bereich mindestens eines Dosenendes etwas verengten Dosenkörper übertragen werden. Die Verengung sollte nur so stark ausgebildet sein, dass die Folie durch einen Schrumpfvorgang an die Aussenfläche anlegbar ist. Dies ist bei einem im Bodenbereich etwas eingezogenen Dosenmantel problemlos möglich. Die bevorzugte Folie ROSO LR 400 mit einer Dicke von 20µm kann beispielsweise in Längsrichtung durch Schrumpfen zumindest um 18% verkürzt werden. Es hat sich nun gezeigt, dass die Folie auch an ein bereits verengtes Halsteil angeschrumpft werden kann. Wenn die Verengung aber zu gross ist, um die Folie durch Schrumpfen an die Verengung anzulegen, so ist es gegebenenfalls zweckmässiger die gesamte Verengung, vorzugsweise aber zumindest einen Teil der Verengung, erst nach dem Anschrumpfen der geschlossenen Folie durchzuführen. Um für einen Verengungsschritt zu gewährleisten, dass die Folie fest mit dem Dosenmantel verbunden ist, muss nach dem Schrumpfvorgang noch ein Siegelvorgang durchgeführt werden, bei dem die Folie zumindest im zu verengenden Bereich fest mit dem Dosenkörper verbunden wird. Die zum Versiegeln benötigte Wärme wird vorzugsweise induktiv auf den Dosenkörper übertragen.

Weil ja die Siegelschicht der bevorzugten Folie, ROSO LR 400, nicht an einer Metalloberfläche festgesiegelt werden kann, wird diese Folie insbesondere dann besonders vorteilhaft eingesetzt, wenn der Dosenkörper aus einem mit Kunststoff beschichteten Blech gebildet ist. Es hat sich gezeigt, dass die Kunststoffbeschichtung eines Dosenkörpers aus beschichtetem Blech äusserst gut mit der Siegelschicht der Folie verbunden werden kann. Vorzugsweise wird dazu lediglich der Dosenkörper induktiv erhitzt. Gegebenenfalls werden aber zumindest in Teilbereichen der Dose Pressflächen zum Festpressen der Folie beim Versiegeln eingesetzt. Diese Pressflächen erhöhen die Haftungskräfte und sind somit vorzugsweise in Dosenbereichen einzusetzen, in denen etwa durch das Einleiten von mechanischen Kräften eine Verformung des Dosenmantels mitsamt der Folie durchgeführt werden soll.

Wenn eine Verformung des offenen Dosenendes durchzuführen ist, wird zumindest eine weitere Bearbeitungsstation vorgesehen, die vorzugsweise einen Drehtisch umfasst, dem mitdrehende Necking-, insbesondere Spin-Flow-Necking-, Einrichtungen zugeordnet sind. Dabei kann die Bearbeitung während der Drehbewegung des Drehtisches durchgeführt werden. Weil bei den Spin-Flow-Necking-Einrichtungen das Bearbeitungswerkzeug und der Dosenkörper um die Dosenachse relativ zueinander gedreht werden, muss nun entweder der Dosenkörper oder das Bearbeitungswerkzeug relativ zum Drehtisch um die Dosenachse in Drehbewegung versetzbar sein. Um ein Umbördeln der freien Stirnseite des verengten Halsteiles zu ermöglichen, wird vorzugsweise eine Randumroll-Vorrichtung vorgesehen. Diese ist etwa den Dosenplätzen eines Drehtisches der Bearbeitungsstation zum Verformen des offenen Dosenendes zugeordnet. Mit der beschriebenen Lösung zum Verformen des offenen Dosenendes kann eine Monobloc-Aerosoldose aus einem beschichteten Flachmaterial mit einer aufgebrachten Dekorfolie hergestellt werden. Es versteht sich von selbst, dass anstelle der Verformung zu einem Ventilsitz einer Aerosoldose, auch ein Dosenabschluss zum Aufbördeln eines Domes mit einem Ventilsitz oder eines Getränkedosendeckels ausgebildet werden kann.

Die Zeichnungen erläutern die erfindungsgemässe Lösung anhand eines Ausführungsbeispieles. Dabei zeigt
- Fig. 1: eine Frontansicht einer Bearbeitungsstation mit einem Drehtisch und darüber angeordneten mitdrehenden Wickeldornen,
- Fig. 2: eine Draufsicht auf eine Bearbeitungsstation gemäss Fig. 1 und zwei weitere daran anschliessende Bearbeitungsstationen,
- Fig. 3: eine schematische Darstellung der Bearbeitungsschritte in der Bearbeitungsstation gemäss Fig. 1,
- Fig. 4: eine schematische Darstellung der Bearbeitungsschritte in einer weiteren Bearbeitungsstation, und
- Fig. 5: ein Schnitt durch den Verbindungsbereich einer zylindermantelförmig geschlossenen Folie

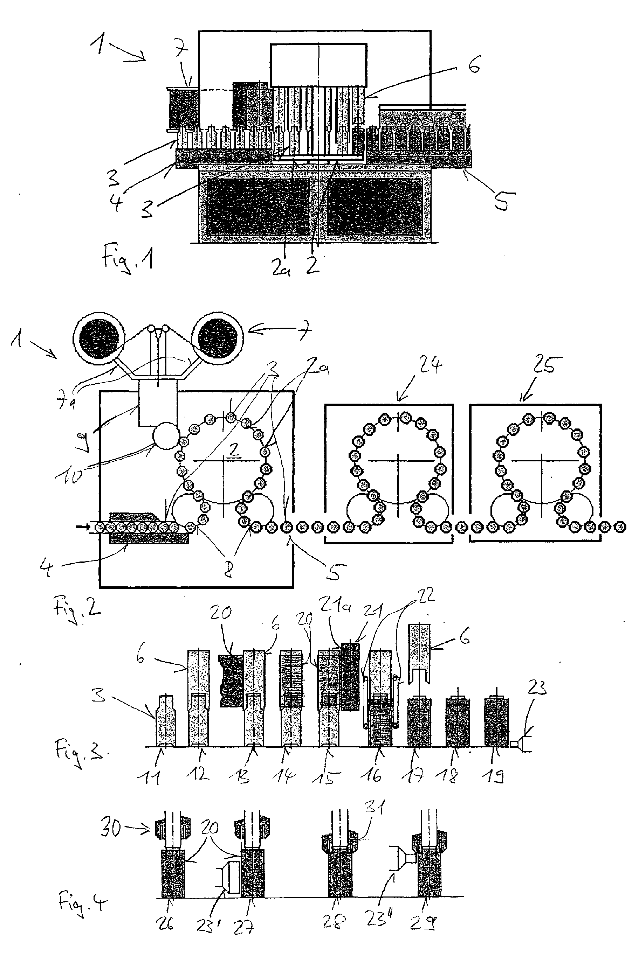

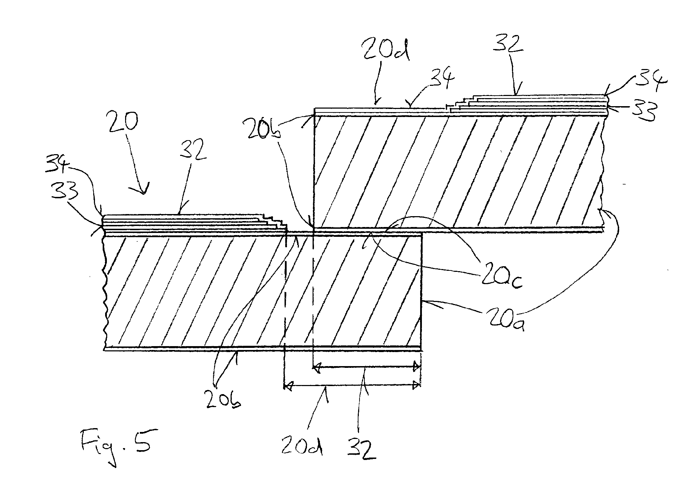

FIG.1 und 2 zeigen eine erste Bearbeitungsstation 1 mit einem Drehtisch 2 auf dem Dosenkörper 3 in Aufnahmen 2a zum Halten der Dosenkörper 3 während der Bearbeitung auf einer Kreisbahn bewegt werden. Die Dosenkörper 3 werden über einen Zuförderer 4 zum Drehtisch 2 und über einen Weiterförderer 5 vom Drehtisch 2 weg gefördert, wobei die Übergabe zwischen den Förderern 4,5 und dem Drehtisch 2 je mittels einem Übergabedrehteller 8 erfolgt. Über jeder Aufnahme 2a des Drehtisches 2 ist ein mit dem Drehtisch mitdrehender Wickeldorn 6 angeordnet. Nachdem ein Dosenkörper 3 vom Zuförderer 4 in eine Aufnahme 2a des Drehtisches 2 aufgenommen worden ist, wird von einer Zuführvorrichtung 7 zum Zuführen von Folienabschnitten ein Folienabschnitt auf den dem Dosenkörper 3 zugeordneten Wickeldorn 6 aufgewickelt. Damit der Folienabschnitt am Wickeldorn 6 hält, umfasst der Wickeldorn 6 vorzugsweise einen Hohlraum, an den Unterdruck und gegebenenfalls auch Überdruck anlegbar ist, und Verbindungsbohrungen, die den Hohlraum mit der Aussenfläche des Wickeldornes 6 verbinden. Über die Verbindungsbohrungen kann sich der Unterdruck zwischen dem Wickeldorn 6 und der Folie ausbilden und die gewünschte Haftung gewährleisten. Es versteht sich von selbst, dass die Folie auch aufgrund von elektrostatischen Haftungskräften, oder gegebenenfalls auch mechanisch am Wickeldorn gehalten werden kann.

Die Zuführvorrichtung 7 zum Zuführen von Folienabschnitten umfasst zumindest eine Folienrollen-Halterung 7a, eine Schneideinrichtung 9 und eine Übertragungseinheit 10. Von der Folienrollen-Halterung 7a gelangt das Folienband in die Schneideinrichtung 9, in welcher vom Folienband Folienabschnitte abgetrennt werden, deren Länge dem Umfang eines Dosenkörpers 3 und einer Überlappungslänge entspricht. Um einen Betrieb ohne Unterbruch zu gewährleisten, werden vorzugsweise zwei Folienrollen-Halterungen 7a vorgesehen, wobei nach dem vollständigen Abrollen des einen Folienbandes der Anfang des zweiten Folienbandes mit dem Ende des ersten Folienbandes verbunden wird. Von der Schneideinheit 9 gelangen die Folienabschnitte 20 über die Übertragungseinheit 10 an einen Wickeldorn 6. Der Umfang des Wickeldornes 6 ist wenig grösser, als der Umfang des mit der Folie zu versehenden Dosenkörpers 3, so dass das aufgewickelte Folienstück mit der Vorderkante und der Hinterkante etwas überlappend am Wickeldorn 6 gehalten werden kann. Die Wickeldorne 6 müssen jeweils ausgewechselt werden, wenn Dosenkörper 3 mit einem anderen Durchmesser bearbeitet werden. Gegebenenfalls sind die Wickeldorne 6 aber so ausgebildet, dass deren Umfang verstellbar ist. Dabei wird der Verstellbereich vorzugsweise so gewählt, dass er den Umfang verschiedener gängiger Dosenkörper 3 umfasst.

Die Bearbeitungsschritte, die auf der ersten Bearbeitungsstation 1 durchgeführt werden, sind in Fig. 3 schematisch dargestellt. Der Dosenkörper 3 gelangt bei Position 11 auf den Drehteller 2, wo von oben der Wickeldorn 6 auf den Dosenkörper 3 bewegt wird bis er gemäss Position 12 oben am Dosenkörper 3 ansteht. Bei Position 13 beginnt das Aufwickeln eines Folienstückes 20, das bei Position 14 vollständig aufgewickelt ist. Bei Position 15 wird eine heizbare Siegelfläche 21a eines Siegelkopfes 21 gegen den Überlappungsbereich des aufgewickelten Folienstückes 20 und somit gegen den Wickeldorn 6 gepresst. Damit die Siegelfläche 21a sicher auf den Überlappungsbereich trifft, ist der Wickeldorn 6 mit dem aufgewickelten Folienstück 20 vorzugsweise ausrichtbar bzw. drehbar. Nach dem Versiegeln wird die mittels Unterdruck oder elektrostatisch erzielte Haftungskraft nicht mehr benötigt. Um eine Verschiebbarkeit des geschlossenen Folienstückes 20 zu gewährleisten, wird vorzugsweise zwischen dem Wickeldorn 6 und dem Folienstück 20 ein Überdruck aufgebaut. Bei Position 16 ist eine Übertragungseinrichtung 22 dem Wickeldorn 6 und der Aufnahme mit dem Dosenkörper 3 zugeordnet, welche das zylindermantelförmig geschlossene Folienstück 20 vom Wickeldorn 6 auf einen Dosenkörper 3 überstülpbar macht. Dazu umfasst die Übertragungsvorrichtung 22 beispielsweise zwei über Rollen laufende Bänder, die in Reibungskontakt mit dem Folienmantel diesen nach unten bewegt.

Bei den Positionen 17 und 18 wird der Wickeldorn 6 nach oben vom Dosenkörper 3 weg und der Dosenkörper 3 auf dem Drehtisch 2 weiter bewegt. Bei Position 19 ist eine Schrumpfvorrichtung 23 vorgesehen, welche das geschlossene Folienstück 20 zumindest in einem Teilbereich an den Dosenkörper 3 schrumpft. Dazu ist die Schrumpfvorrichtung 23 vorzugsweise als Heissluftquelle ausgebildet, welche die Heissluft dem gewünschten Dosenbereich zuführt. Um ein Schrumpfen auf dem ganzen Umfang zu gewährleisten, wird eine Luftführung gewählt die Heissluft entlang des gesamten Umfanges bereitstellt. Gegebenenfalls wird aber auch der Dosenkörper 3 gedreht. Aufgrund dieses Schrumpfvorganges haftet das geschlossene Folienstück 20 bereits so gut am Dosenkörper 3, dass der Dosenkörper 3 mitsamt dem Folienstück 20 aus der ersten Bearbeitungsstation 1 zu weiteren Bearbeitungsstationen geführt werden kann.

Gemäss Fig. 2 schliessen an die erste Bearbeitungsstation 1 vorzugsweise hintereinander eine zweite und ein dritte Bearbeitungsstation 24 und 25 an. Die Bearbeitungsschritte, die auf der zweiten Bearbeitungsstation 24 durchgeführt werden, sind in Fig. 4 schematisch dargestellt. Bei Position 26 wird ein Halteteil 30 von oben gegen den Dosenkörper bewegt, um diesen zu halten. Bei Position 27 wird das Folienstück 20 mittels einer Schrumpfvorrichtung 23' an den zylindrischen Teil des Dosenkörpers 3 geschrumpft. Gegebenenfalls wird bei Position 28 das geschlossene Folienstück 20 oben mit einer Spannzange gefasst und anschliessend bei Position 29 im oberen Endbereich des Dosenkörpers 3 mittels einer weiteren Schrumpfvorrichtung 23" das Folienstück 20 angeschrumpft.

Die an das Schrumpfen anschliessenden Bearbeitungsschritte hängen stark von der Art der bereitzustellenden Dosen ab. Bei Folienstücken 20, die grossflächig am Dosenkörper 3 haften müssen, wird eine Folie gemäss Fig. 5 eingesetzt. Fig. 5 zeigt einen Ausschnitt eines zylindermantelförmig geschlossenen Folienstück 20 mit einem Überlappungsbereich 32. Im Überlappungsbereich 32 sind aneinander anliegende Folienbereichen 20c der Vorderkante und der Hinterkante miteinander versiegelt. Das Folienstück 20 umfasst eine Hauptschicht 20a aus Kunststoff und beidseits je eine Heissiegelschicht 20b. Auf dem Folienstück 20 ist ein Dekor 32 mit nacheinander aufgetragenen Druckfarblagen 33 und einer Schutzlackschicht 34 angeordnet. Um die Versiegelung im Überlappungsbereich 32 nicht zu beeinträchtigen, ist in einem Freibereich 20d zumindest bei der innen, bzw. näher zum Dosenkörper, liegenden Vorderkante kein Dekor auf die Siegelschicht 20b aufgetragen. Das dargestellte Folienstück 20 hat auch bei der Hinterkante einen Freibereich 20d ohne Dekor. Weil nun bei den Freibereichen 20d keine Farbe auf dem Folienstück 20 ist, würde sich dort ein unerwünschter Durchblick auf den Dosenkörper ergeben. Um dies zu verhindern, wird vorzugsweise die Hauptschicht 20a der Folie etwas eingefärbt. Falls die Heisssiegelschicht 20b mit der Schutzlackschicht 34 versiegelbar ist, so kann auf Freibereiche 20d und eine Einfärbung der Hauptschicht 20a verzichtet werden.

Um eine siegelbare Folie an der Aussenfläche des Dosenkörpers 3 festsiegeln zu können, muss die Aussenfläche des Dosenkörpers 3 mit dieser Siegelschicht eine Siegelverbindung eingehen können. Weil der Wickeldorn 6 keine Siegelverbindung mit der Siegelschicht 20b der Folie eingehen darf, ist es zweckmässig eine Siegelschicht zu verwenden, die lediglich auf Kunststoffen siegelt. Es können dann beispielsweise ein Wickeldorn 6 aus Metall und ein mit Kunststoff beschichteter Dosenkörper 3 verwendet werden. Um eine solche siegelbare Folie am Dosenkörper 3 festzusiegeln, wird ein Siegelvorgang durchgeführt. Die zum Versiegeln benötigte Wärme wird vorzugsweise induktiv über den Dosenkörper 3, gegebenenfalls aber in der Form von Strahlungswärme und/oder Kontaktwärme, zugeführt. Gegebenenfalls wird zumindest ein Teil der an den Dosenkörper geschrumpften Folie mittels zumindest einer Pressfläche an den Dosenkörper gedrückt. Besonders gute Siegelverbindungen zwischen dem Folienstück und dem Dosenkörper werden insbesondere in Bereichen benötigt, die nach dem Aufbringen des Folienstückes verformt werden.

Bei Aresoldosen mit grossen Durchmessern muss am offenen Ende ein Halsstück zum Aufnehmen eines Ventiles stark verengt werden. Dazu wird auf einer Bearbeitungsstation ein bereits etwas verengtes oder auch ein zylindrisches freies Dosenende auf den gewünschten Durchmesser verengt. Bei der Verwendung einer stark schrumpffähigen Folie kann die Verengung des Dosenkörpers 3 vor dem Aufbringen des Folienstückes 20 durchgeführt werden. Bei der Verwendung einer Folie mit mittlerer Schrumpffähigkeit ist es aber zweckmässig sowohl vor als auch nach dem Aufbringen der Folie lediglich einen Teil des Verengens bzw. des Neckings durchzuführen. Dabei ist es möglich, die Verengung vor dem Aufbringen der Folie mit stauchenden Ringen und nach dem Aufbringen der Folie mit den bekannten spin-flow-Werkzeugen druchzuführen. Nach dem genügenden Verengen des Halsteiles wird insbesondere der freie Rand zu einem Rollrand umgeformt.

Es versteht sich von selbst, dass die beschriebenen Bearbeitungsschritte auch in Bearbeitungsstationen ohne Drehtische durchgeführt werden können, wobei dann aber unerwünschte stop-and-go Schritte nötig sind.

## Patentansprüche

1. Verfahren zum Anbringen einer Dekorfolie auf einem Dosenkörper (3), bei welchem Verfahren von einer Folienbahn ein Folienstück (20) abgeschnitten und an der Aussenfläche eines Dosenkörpers festgesetzt wird, **dadurch gekennzeichnet, dass** das Folienstück (20) von dessen Vorderkante zu dessen Hinterkante auf einen Wickeldorn (6) aufgewickelt und etwas überlappend am Wickeldorn (6) gehalten wird, die aneinander anliegenden Folienbereiche (20c) der Vorderkante und der Hinterkante am Wickeldorn (6) miteinander versiegelt werden, anschliessend das zylindermantelförmig geschlossene Folienstück (20) vom Wickeldorn (6) auf einen Dosenkörper (3) bewegt und mittels eines Schrumpfvorganges zumindest teilweise an den Dosenkörper (3) angelegt wird.

2. Verfahren nach Anspruch 1, **dadurch gekennzeichnet, dass** das Folienstück (20) mittels Unterdruck am Wickeldorn (6) gehalten wird.

3. Verfahren nach Anspruch 1 oder 2, **dadurch gekennzeichnet, dass** zum Versiegeln der aneinander anliegenden Folienbereiche (20c) eine Siegelfläche gegen den Wickeldorn (6) gepresst wird und dabei eine Siegeltemperatur erreicht wird, die vorzugsweise unterhalb der minimalen Schrumpftemperatur zum Durchführen des Schrumpfvorganges liegt, wobei der Wickeldorn (6) mit dem aufgewickelten Folienstück (20) zum Versiegeln, so ausrichtet wird, dass die Siegelfläche dem Überlappungsbereich (32) zugeordnet ist.

4. Verfahren nach einem der Ansprüche 1 bis 3, **dadurch gekennzeichnet, dass** ein Dosenkörper (3) in Achsrichtung an den Wickeldorn (6) anschliessend angeordnet wird, anschliessend an das Versiegeln die Haltekräfte zum Halten des Folienstückes (20) am Wickeldorn (6) ausgeschaltet werden und vorzugsweise eine Verschiebbarkeit des Folienstückes (20) am Wickeldorn (6) durch das Aufbauen eines Überdruckes zwischen dem Wickeldorn (6) und dem Folienstück (20) oder durch das Verkleinern des Wickeldorndurchmessers erzielt wird, so dass das geschlossenen Folienstück (20) reibungsarm vom Wickeldorn (6) auf den Dosenkörper (3) geschoben werden kann.

5. Verfahren nach einem der Ansprüche 1 bis 4, **dadurch gekennzeichnet, dass** zum Durchführen des Schrumpfvorganges zumindest einem Teilbereich des, auf den Dosenkörper (3) übertragenen, geschlossenen Folienstückes (20) Wärme zugeführt wird, wobei die Wärme vorzugsweise in der Form von Strahlungswärme und/oder Kontaktwärme, insbesondere mittels Heissluft, gegebenenfalls aber auch induktiv über den Dosenkörper (3), zugeführt wird.

6. Verfahren nach einem der Ansprüche 1 bis 5, **dadurch gekennzeichnet, dass** zum Durchführen eines Verbindungsvorganges zumindest einem Teilbereich der auf den Dosenkörper (3) übertragenen Folie Wärme, und gegebenenfalls auch eine Anpresskraft, zugeführt wird, so dass eine Siegelverbindung zwischen zumindest einem Teilbereich des Folienstückes (20) und dem Dosenkörper (3) erzielt wird, wobei die Wärme vorzugsweise induktiv über den Dosenkörper (3), gegebenenfalls aber in der Form von Strahlungswärme und/oder Kontaktwärme, zugeführt wird.

7. Vorrichtung zum Anbringen einer Dekorfolie auf einem Dosenkörper (3) mit zumindest einer Aufnahme zum Halten eines Dosenkörpers (3), einer Zuführvorrichtung (7) zum Zuführen von Folienstücken (20) und zumindest einer heizbaren Siegelfläche, **dadurch gekennzeichnet, dass** zumindest ein Wickeldorn (6) vorgesehen ist, an dem Folienstücke (20) unter Haftung aufwickelbar sind, wobei das aufgewickelte Folienstück (20) mit der Vorderkante und der Hinterkante etwas überlappend am Wickeldorn (6) haltbar ist, die heizbare Siegelfläche gegen den Wickeldorn (6) pressbar ist, wobei der Wickeldorn (6) mit dem aufgewickelten Folienstück (20), so ausrichtbar ist, dass die Siegelfläche dem Überlappungsbereich (32) zugeordnet ist, zumindest eine Übertragungseinrichtung (22) ausgebildet ist, welche ein zylindermantelförmig geschlossenes Folienstück (20) vom Wickeldorn (6) auf einen Dosenkörper (3) überstülpbar macht, und zumindest eine Schrumpfvorrichtung (23,23',23") vorgesehen ist, welche das Folienstück (20) zumindest in einem Teilbereich an den Dosenkörper (3) schrumpfbar macht.

8. Vorrichtung nach Anspruch 7, **dadurch gekennzeichnet, dass** der Wickeldorn (6) mit einem Hohlraum an eine Unterdruck-Vorrichtung, vorzugsweise auch an eine Überdruck-Vorrichtung, angeschlossen ist und im Mantel des Wickeldornes (6) an den Hohlraum anschliessende Öffnungen ausgebildet sind, so dass das Folienstück (20) mittels Unterdruck am Wickeldorn (6) haltbar und gegebenenfalls mittels Überdruck verschiebbar ist.

9. Vorrichtung nach Anspruch 7 oder 8, **dadurch gekennzeichnet, dass** die Vorrichtung zumindest einen Drehtisch (2) umfasst, der auf einer Kreislinie in gleichen Abständen Aufnahmen (2a) zum Halten von Dosenkörpern (3), über jeder Aufnahme (2a) einen Wickeldorn (6) und zumindest in einem Siegelbereich für jeden Wickeldorn (6) eine Siegelfäche (21a) aufweist.

10. Vorrichtung nach einem der Ansprüche 7 bis 9, **dadurch gekennzeichnet, dass** die Übertragungseinrichtung (22) zumindest ein Betätigungselement umfasst, welche das zylindermantelförmig geschlossene Folienstück (20) vom Wickeldorn (6) auf einen Dosenkörper (3) bewegbar macht.

11. Vorrichtung nach einem der Ansprüche 7 bis 10, **dadurch gekennzeichnet, dass,** die mindestens eine Schrumpfvorrichtung (23,23',23") zum Durchführen des Schrumpfvorganges zumindest einem Teilbereich des auf den Dosenkörper (3) übertragenen Folienstückes (20) Wärme zuführbar macht, wobei die Wärme vorzugsweise in der Form von Strahlungswärme und/oder Kontaktwärme, insbesondere mittels Heissluft, gegebenenfalls aber auch induktiv über den Dosenkörper (3), zugeführt wird.

12. Verfahren nach einem der Ansprüche 7 bis 11, **dadurch gekennzeichnet, dass** eine Verbindungsvorrichtung zum Durchführen eines Verbindungsvorganges zumindest einem Teilbereich des auf den Dosenkörper (3) übertragenen Folienstückes (20) Wärme, und gegebenenfalls auch eine Anpresskraft, zuführbar macht, so dass eine Siegelverbindung zwischen zumindest einem Teilbereich des Folienstückes (20) und dem Dosenkörper (3) erzielt wird, wobei die Wärme vorzugsweise induktiv über den Dosenkörper (3), gegebenenfalls aber in der Form von Strahlungswärme und/oder Kontaktwärme, zugeführt wird.

13. Dosenkörper (3) mit einer Dekorfolie, wobei sich ein Folienstück (20) um den Dosenumfang erstreckt, welches zumindest eine Siegelschicht umfasst, in einem Überlappungsbereich die aneinander anliegenden Folienbereiche miteinander versiegelt sind und das Folienstück (20) als Schrumpffolie ausgebildet ist und dabei in den beiden Hauptrichtungen unterschiedliche Schrumpffähigkeiten hat, **dadurch gekennzeichnet, dass** das Folienstück (20) überall direkt und somit klebstofffrei am Dosenkörper (3) anliegt und sich die Folienrichtung mit erhöhter Schrumpffähigkeit in Umfangsrichtung des Dosenkörpers (3) erstreckt.

14. Dosenkörper nach Anspruch 13, **dadurch gekennzeichnet, dass** das Folienstück (20) eine Dicke von weniger als 25µm, vorzugsweise zwischen 9µm und 21µm aufweist, vorzugsweise zumindest in einem Randbereich bei der einen achsparallelen Kante unbedruckt ist und gegebenenfalls im Folienbereich zwischen den beiden Siegelschichten eingefärbt ist.

15. Dosenkörper nach Anspruch 13 oder 14, **dadurch gekennzeichnet, dass** der Dosenkörper (3) mit Kunststoff beschichtet ist und die Siegelschicht des Folienstückes (20) zumindest in einem Teilbereich des Dosenkörper (3) mit der Kunststoffbeschichtung versiegelt ist.
